# EUROPEAN PATENT SPECIFICATION

(11) **EP 3 878 819 B1**
(45) Date of publication and mention of the grant of the patent: **16.10.2024**
(21) Application number: 20162447.5
(22) Date of filing: 11.03.2020
(51) Int. Cl.: C02F 1/00, B01D 24/00, B01D 24/10, B01D 24/40, B01D 24/48

(54) **ADVANCED FILTRATION SYSTEM FOR THE TREATMENT OF MAINLY STORMWATER RUNOFF FROM LARGE SURFACES AND WASTEWATER**
FORTSCHRITTLICHES FILTRATIONSSYSTEM ZUR BEHANDLUNG VON HAUPTSÄCHLICH REGENWASSERABLAUF VON GROSSEN OBERFLÄCHEN UND VON ABWASSER
SYSTÈME DE FILTRATION AVANCÉ POUR LE TRAITEMENT PRINCIPALEMENT DU RUISSELLEMENT D'EAU DE PLUIE À PARTIR DE GRANDES SURFACES ET D'EAUX USÉES

(43) Date of publication of application: 15.09.2021
(73) Proprietor: SWI Group S.r.l., 30176 Venice/Veneto (IT); Biondi, Stefano, 30126 Venice/Veneto (IT); Bertevello, Umberto, 31100 Treviso/Veneto (IT)
(72) Inventor: Biondi, Stefano, 30126 Venice/Veneto (IT); Bertevello, Umberto, 31100 Treviso/Veneto (IT)

(56) References cited:
- CN-A- 106 277 434
- US-A1- 2008 078 720
- US-A1- 2014 251 928

## Description

### APPLICATION FIELD

The following Invention, named SWID, is an advanced filtration system designed mainly for stormwater management and treatment, and for wastewater treatment, with the purpose of guaranteeing environmental protection to receiving waters. This plant, designed mainly to manage stormwater runoff flowing on large surfaces, and waste water, is sized usually as a container ruled by ISO 668:2013, thus it's characterized by reduced dimensions, modularity and ease of transport, guaranteeing high treatment performances in terms of treated flowrate and depuration efficiencies. Plants with further reductions in dimensions and flowrate can be designed to ease their installation on uncomfortable areas, such as viaducts, which have low space availability and multiple, hard-to-access discharge points.

### ISSUES

Conventional gravity filter systems, such as sand filters, quartz sand filters and active carbon filters, have treatment efficiencies which reveal to be far lower respect to the potential capacity of their filter material, mainly due to the complexity of filtration dynamics and the difficulty to distribute the stream properly across the filtration chamber.

The following issues are matter of particular concern:
1. Difficulties in the removal of fine material and heavy metals from stormwater and waste water, both deriving from the lugging action of water runoff on ground surfaces, through traditional filtration technologies.
2. Vertical streams of water, both gravitational (from the top to the bottom) and pressurized (from the bottom to the top), do not allow an accurate control of the flow velocity and the filtration rate, depending only on gravitational forces and headlosses, regardless of the water flowrate.
3. A non-optimized distribution of water through the filtration material leads to material clogging and preferential filtration pathways, causing an inhomogeneous employment of the material and thus reducing its treatment performance.
4. An unilateral wastewater flux, from the top toward the bottom, tends to saturate the upper part far more than the lower one, which results to work less. As a consequence, the replacement of the filter media is necessary even when the upper part is saturated but the lower part is still able to work. This leads to higher costs of maintenance, due to low efficiencies in filter saturation.
5. The inability to check the degree of saturation of the filter material in absence of monitoring systems that detect the functional status and the treatment efficacy of the system.

Systems for treating stormwater runoff or rainwater are for instance described in US2014251928A1 and CN106277434A.

### RESOLUTIONS AND PURPOSES

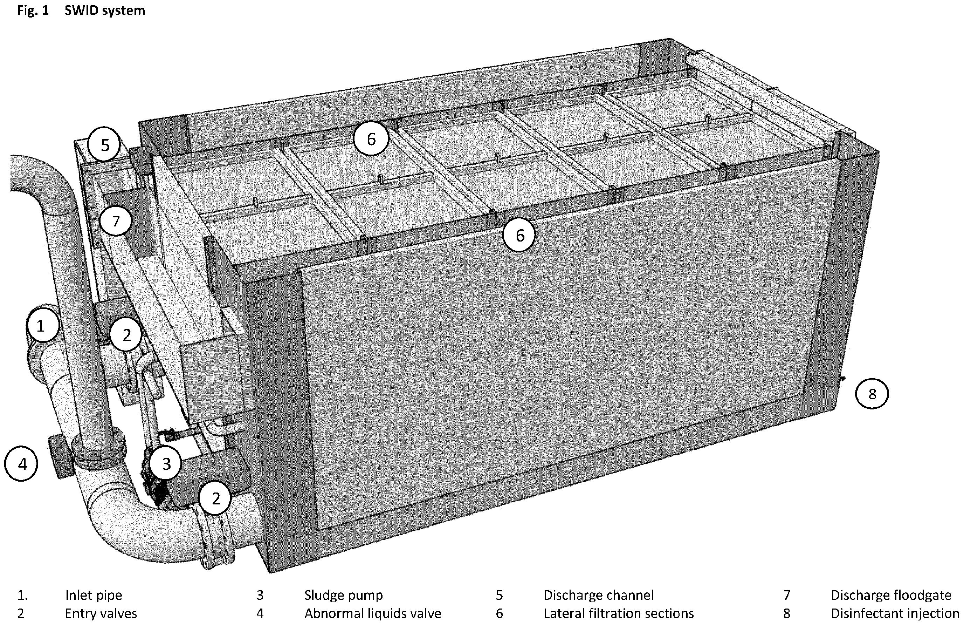

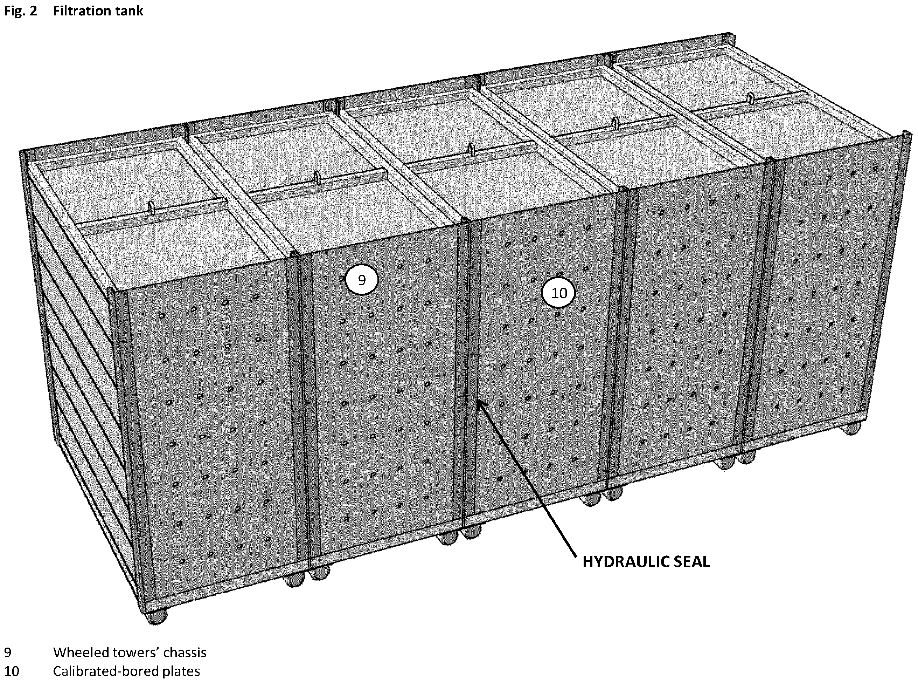

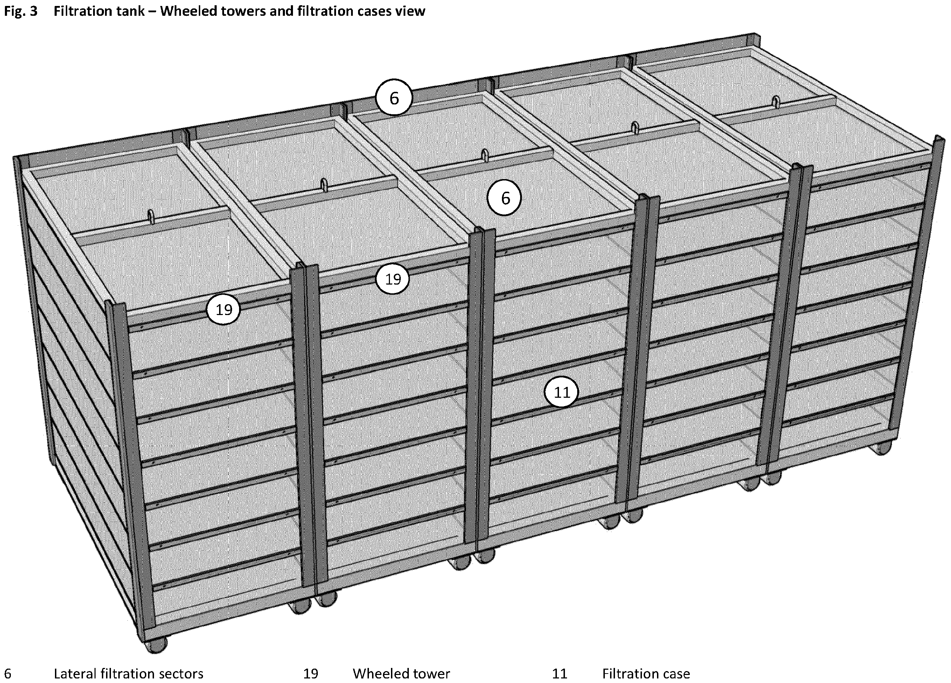

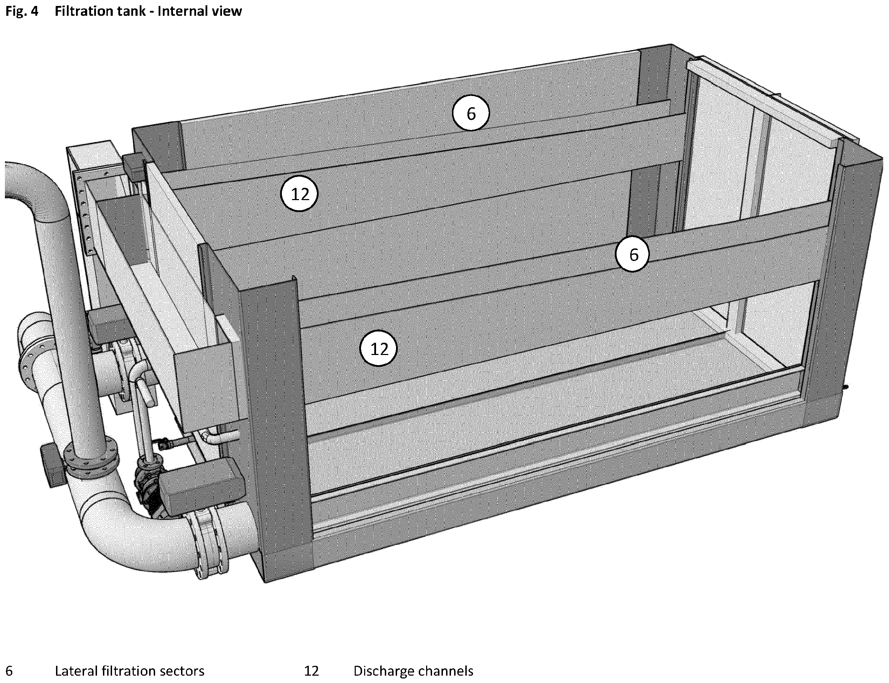

The ameliorative and innovative solutions for the critical points highlighted above, integrated in SWID technology, include:
1. Treatment of stormwater runoff flowing on impermeable surfaces by installing continuous, high-level filtration systems and employing a selected mixture of filter material in accordance with the nature of the pollutants to remove, with the purpose of removing the non-settleable, dissolved pollutants typically present on large and impermeable surfaces.
2. A horizontal-flux filtration and adsorption system, to guarantee the largest filtration surface as possible, higher contact times and a better optimization of the filtration media efficiency.
3. Modular, watertight filtration cases, equipped with calibrated-section water entry and exit systems to guarantee a constant filtration velocity and thus optimize the contact time between wastewater and filter media (Fig. 2 and 3).
4. The plant is designed to work aboveground, leading to a drastic reduction of thenecessary civil works by minimizing excavations, thus eventual site remediation, and infrastructures.
5. SWID minimizes the issues related to soil occupation and construction site logistics, guaranteeing high treatment performances in terms of treated water at farlower costs than every other solution, both in terms of unitary costs and filtration capacity per surface and volume units for each Plant.
6. Ability to apply revamping interventions on existing plants, recovering and reusing the existing sewerage system and thus limiting civil works to only the treatment Plant itself.
7. SWID is designed to automatically manage emergencies, deriving from accidental spillovers of potentially contaminated liquids, through a computing system which elaborates data collected from multi-parametric sensors (devices that continuously monitor the quantitative and qualitative characteristics of stormwater) and retains the stormwater load, preventing its discharge into the receiving water body.
8. Maintenance operations of SWID are facilitated by the employment of modular filtration cases in wheeled towers, which are easily removable from SWID and thus minimize the necessary workspace for maintenance, in accordance with the most advanced principles of ergonomics.
9. SWID functioning requires very low energetic costs. Except for eventual pretreatment and elevation systems, it doesn't employ power devices, so energetic supplies are minimized and, eventually, replaceable by renewable energy systems.
10. The plant is remotely manageable by means of a centralized SCADA monitoring system. The system is able to automatically adjust and manage each phase and function of the system, in particular the flowrates involved.
11. SWID is equipped with an automated cleaning and sanitation system, run at the end of each treatment cycle, in order to extend the lifespan of the filtering media and to avoid biofouling of the media.

### DESCRIPTION

SWID technology is constituted by an advanced modular filtration system filled with a physically adsorbent media, as defined in clam 1.

The stream flows horizontally and the flowrate is calibrated. This system is able to purify stormwater runoff, in order to guarantee environmental protection to the receiving water bodies.

SWID plant is fully enclosed in an container ruled by ISO 668:2013, wherein the following components are contained:
1. A hydraulically sealed tank, containing the treatment plant, equipped with:
   - A system of level and functional sensors, to monitor the process;
   - A central filtration sector, constituted by wheeled towers installed in parallel combination and containing modular filtration cases, which are installed one on top of each other and filled with filter media.

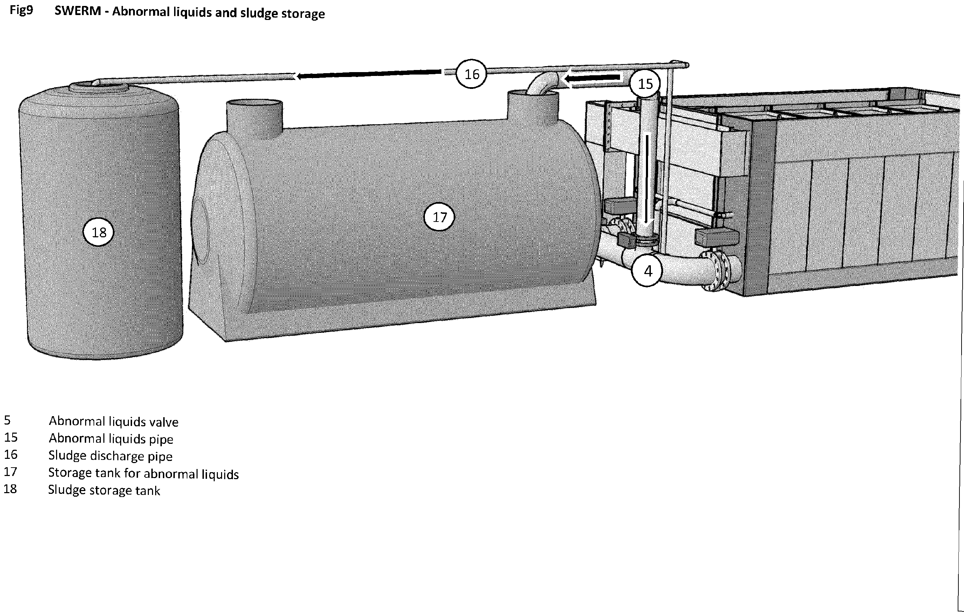

   The front and the back sides of the towers are covered by calibrated-bored plates, to guarantee a constant inward flux of wastewater and a constant outward flux of treated water at each modular case. The bored plates are fixed on the structure by means of proper hydraulic seals. At each modular case, the calibrated bores on the front side are misaligned with the ones on the back side, to allow the stream to flow diagonally through the filter media. This design ensures an independent treatment within each case, and a controlled pathway for the water flow (see Figure 2).
   - Two lateral channels, for the inlet of wastewater and outlet of treated water;
   - Three overflow channels, two mounted laterally at the upper side of the tank, and one mounted on the back, for the discharge of the treated water.
2. The dry sector of the plant, where the following components are located:
   - An electrical panel, with a PLC (Programmable Logic Controller) computing system, designed to control and manage the Plant, connected to a SCADA Software to allow the remote monitoring of the process;
   - A tank for the storage of eventual contaminant spillovers (Fig. 9);
   - A tank for the storage of both the cleaning wastewater and the process sludge (Fig. 9), pumped at the end of each cycle from the filtration plant;
   - A system of multi-parametric and functional sensors, for the management of emergencies.

### Each treatment cycle works as described below:

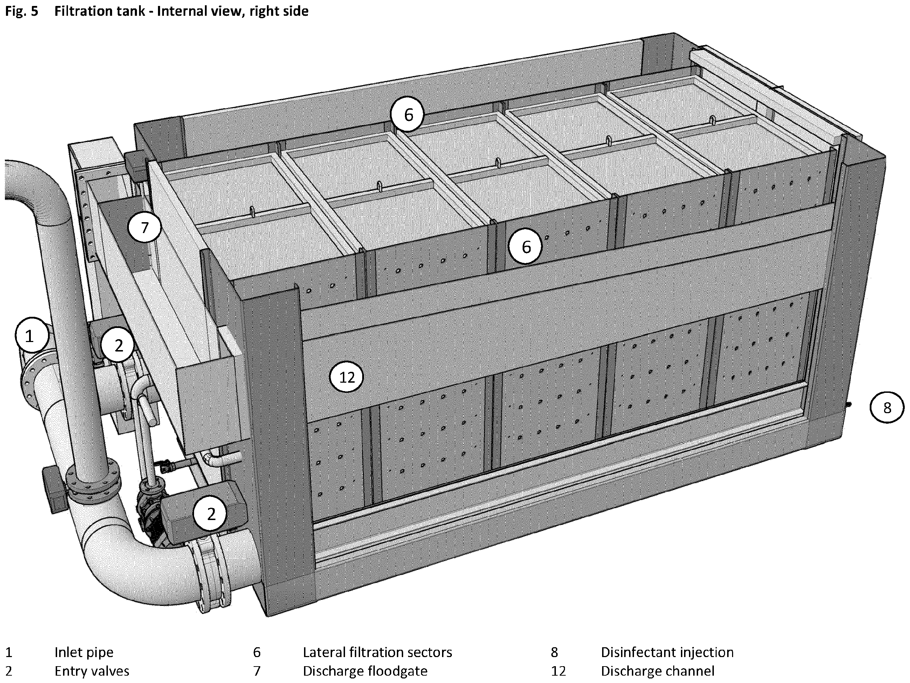

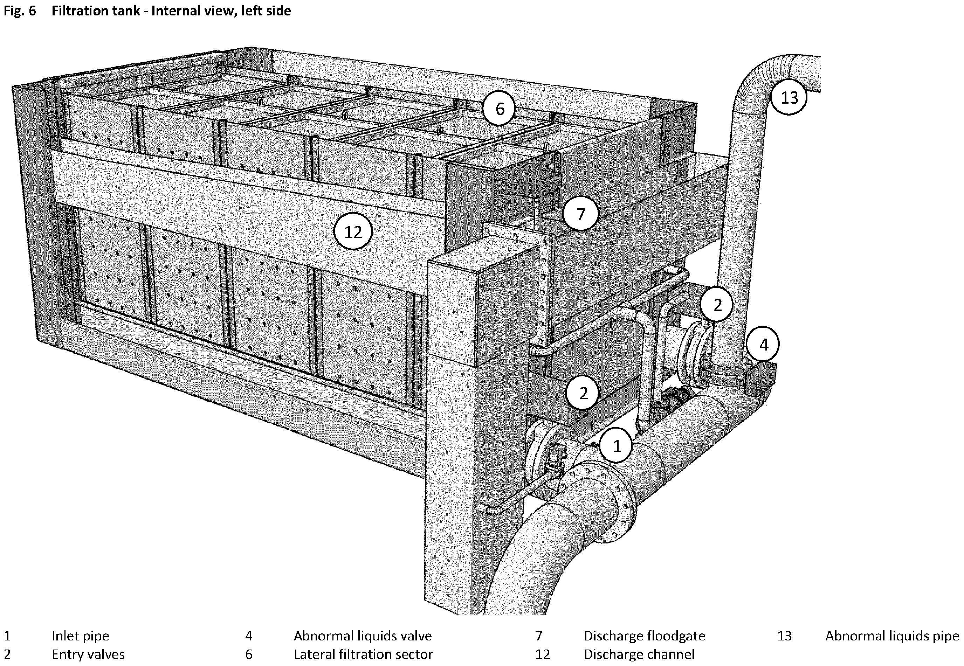

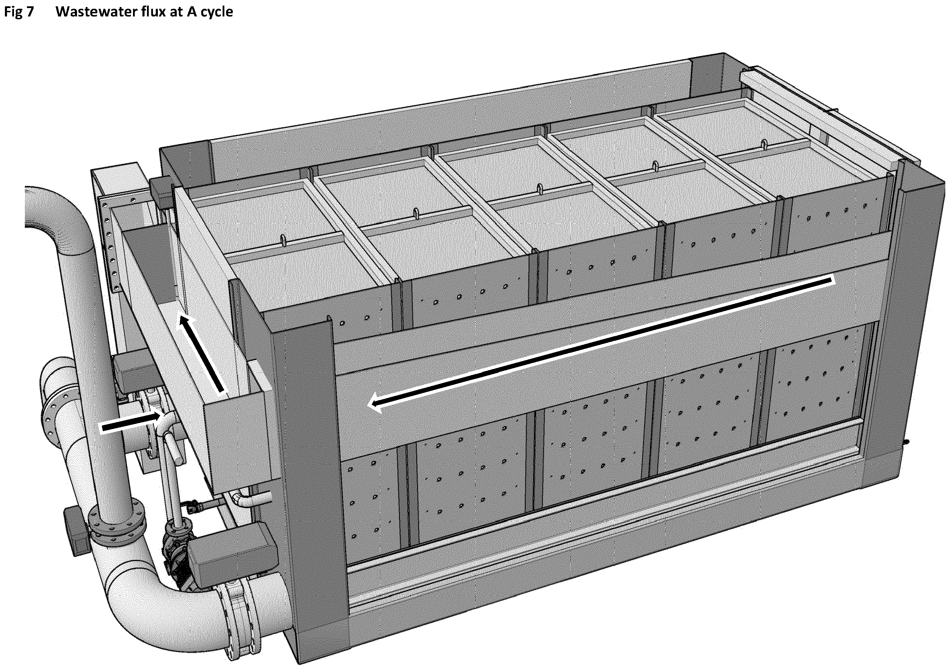

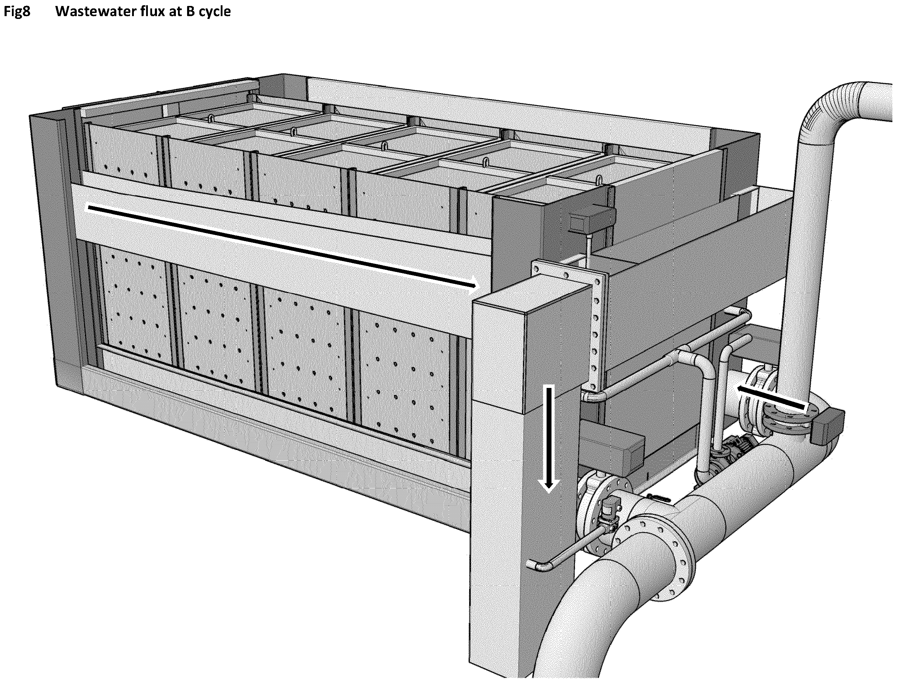

- Stormwater is introduced into the treatment tank, entering section 1 or section 2 at alternate cycles (A cycle and B cycle, fig. 7-8). The two inlet pipes are welded to the tank at bottom-level of section 1 and section 2, and the flow is alternate by means of automated valves located upstream. When the flow enters section 1, then it exits the tank via section 2, and reverse.
- When the water head inside the section arises, water begins to gradually filtrate through the calibrated bores into the modular cases, involving first the lower cases and then gradually the upper ones.
- By passing through the cases, stormwater overcomes filtration process and physical adsorption of contaminants, with removal of also the dissolved substances. Water flows horizontally toward the other section, and, at the end of its pathway, it spills out through the calibrated bores into the discharge channel.
- As the flowrate increases, the water head inside the tank increases too, and the flow begins to gradually involve the upper cases.
- When the maximum water level is reached in the tank, the treated water overflows and pours into the upper channels.
- A valve, or an automated floodgate, regulates the discharge from the overflow channels into the channel located behind the tank.
- Finally, water is discharged by gravity into a pit and then into the receiving water body, or alternatively it gets reused for civil or industrial purpose.
- On the lateral channels at section 1 and 2, which work alternatively as feeding/discharge channels, level sensors are installed, in order to regulate the electrovalves to balance the levels or to adjust the flowrate in case of clogging of the filter media.
- At the end of each treatment cycle, the system starts automatically a sanitation process by dosing and injecting a hydrogen peroxide (H₂O₂) based disinfectant, a substance characterized by a high oxidizing potential, able to destroy bacteria and completely biodegradable in water (see Figure 5).
- The system includes the final voiding of the tank, with discharge of the sludge into a storage tank, where it then settles. SWID plant is thus kept dry and without stagnant waters, which would otherwise foster bacterial proliferation (Figure 3).
- When biodegradable organic pollutants are present in wastewater (for example, polychlorinated biphenyl "PCB"), SWID plant is integrated with an automated system which regenerates the filter media by injecting ozonized water (O₃) to decompose the existing organic matter, extending the lifespan of the filter and reducing the costs for disposal.

Thanks to the creation of forced and alternate, calibrated hydraulic pathways and to the inversion of the flow direction at each treatment cycle, SWID allows an optimized and homogeneous employment of the whole filter media.

As a function of stormwater characteristics, it's possible to improve the plant by introducing a hydrodynamic vortex separation system upstream, for the removal of suspended solids. The introduction, or not, of this optional unit depends also on the site specific conditions.

The plant is equipped with a system for the management of emergencies, which confines eventual spillovers of abnormal liquids.

Through elaboration of data from level and multi-parametric sensors, SWID is able to identify automatically eventual anomalous spillovers, which get intercepted and sent to a liquid storage tank, in order to prevent the spread of contaminants into the environment. An alert is sent to inform the manager of the plant (Figure 3).

An appropriately programmed PLC, installed inside the control panel of the SWID plant, manages automatically every process in the plant, allowing also remote management through a SCADA software. Its tasks are:
- Management of eventual upstream plants, such as elevation systems with automate and manual on-off switches for pumps, functional status and alarms, level measurement and data reading at the recirculation tank and alert of eventual overflows or emergency alarm;
- Management of the SWID process, with periodical inversion of the flux inside the tank and adjustment of the flow according to the filling degree of the filter media;
- Data reading from every sensor, including rain, flow, level and multi-parametric sensors;
- Management of the continuous, qualitative monitoring system, with elaboration of data recorded from the sensors to detect anomalies, emergencies and spillovers, with consequent alert notification and confinement of abnormal liquids.

To facilitate maintenance operations, the wheeled towers, containing modular filtration cases, can be extracted from the plant and the filter material can be took off and replaced. Each modular case is removable from the wheeled towers.

SWID dimensions and operational flowrate can be sized according to the necessities and site space availability, for example in case of big road infrastructures in viaducts, characterized by many, hard-to-access discharge points, non collectable and/or located in narrow spots with low space availability, in order to guarantee local and punctual treatments.

SWID technology is always equipped with horizontal-axis filtration modules, with counterflux and horizontal/transversal flux flowing from the bottom to the top. The system can be fed exclusively with renewable energies, integrated with photovoltaic units that will convert sunlight into electricity, working in combination with a micro hydroelectric turbine, which uses the kinetic energy of the stormwater stream to produce electricity. In this case the system is energetically self-sufficient.

## Claims

1. A horizontal-flux filtration system for stormwater and wastewater treatment, wherein the system comprises:
a. a hydraulically sealed tank, comprising:
i. a central filtration sector comprising a plurality of wheeled towers installed in parallel combination and hydraulically sealed one to each other, wherein the towers are constituted by modular filtration cases installed one on top of each other and filled with filter media; and wherein the front and the back side of each tower are covered by calibrated-bore plates configured to provide a constant inward flux of wastewater and a constant outward flux of treated water at each modular case, and wherein in each modular case the calibrated bores on the front side are misaligned with the ones on the back side, to allow the stream to flow diagonally though the filter media;
ii. two lateral channels, which work alternatively as feeding channel for the inlet of wastewater and as discharge channel for the outlet of treated water on opposite sides of the central filtration sector;
iii. automated valves upstream of said channels for reversing the flow direction;
b. a system of multi-parametric and functional sensors, for the management of emergencies;
c. a sludge pump, configured to discharge the sludge from the hydraulically sealed tank;
d. a storage tank for receiving and settling the discharged sludge;
e. a programmable logic controller (PLC) configured to:
i. manage eventual upstream plants, such as elevation systems with automatic and manual on-off switches for pumps, functional status and alarms, level measurement and data reading at a recirculation tank and alert of eventual overflows or emergency alarm;
ii. manage the filtration process, periodically inverse the flux inside the tank and adjust the flow according to the filling degree of the filter media;
iii. read data from every sensor, including rain, flow, level and multi-parametric sensors;
iv. manage the system of multi-parametric and functional sensors, with elaboration of data recorded from the sensors to detect anomalies, emergencies and spillovers, with consequent alert notification and confinement of abnormal liquids.

2. The system of claim 1, wherein the wheeled towers, containing modular filtration cases, can be extracted, so that the filter material can be taken off and replaced and wherein each modular case is removable from the wheeled towers.

3. The system according to any of the preceding claims further comprising an hydrodynamic vortex separation system upstream of the hydraulically sealed tank, for removal of suspended solids.

4. The system according to any of the preceding claims further comprising means for dosing and injecting a hydrogen peroxide-based disinfectant for sanitation of the filter, thus avoiding biofilm generation on the filtration media.

5. The system according to any of the preceding claims further comprising automated system which regenerates the filter media by injecting ozonized water.

6. The system according to any of the preceding claims further comprising a renewable energy system comprising photovoltaic units that will convert sunlight into electricity, working in combination with a micro-hydroelectric turbine, which uses the kinetic energy of the water stream to produce electricity.

## Patentansprüche

1. Ein Filtersystem mit horizontaler Filterung zur Behandlung von Abwasser und abfließendem Regenwasser besteht aus :
a. Einem wasserdichten Speichertank, bestehend aus :
i. Einem zentralen Filtersektor mit mehreren Rollgerüsten, die parallel installiert und hydraulisch gegeneinander abgedichtet sind. Jedes Rollgerüst umschließt modulare Filtereinheiten, die übereinander angeordnet und mit Filtermedien gefüllt sind; die Rollgerüste sind durch vordere und hintere Seitenplatten mit kalibrierten Löchern abgedeckt, um innerhalb jeder modularen Filtereinheit eine hydraulische Kraft nach innen für das Abwasser und nach außen für das behandelte Wasser zu erzeugen; Außerdem sind in jeder modularen Filtereinheit die kalibrierten Löcher in den vorderen Platten nicht mit den Löchern in den hinteren Platten ausgerichtet, so dass die Strömungen diagonal über die Filtermedien fließen.
ii. Zwei Seitenkanäle, die abwechselnd als Zuführungskanal für den Abwassereinlass und als Abflusskanal für den Auslass des behandelten Wassers auf der gegenüberliegenden Seite der zentralen Filtereinheit fungieren;
iii. Automatische Ventile vor den vorherigen Seitenkanälen ermöglichen eine Umkehrung der Fließrichtung;
b. Ein multifunktionales Detektorsystem mit mehreren Parametern für das Notfallmanagement;
c. Eine Schlammpumpe, die so konfiguriert ist, dass sie den Schlamm aus dem wasserdichten Lagertank entfernt;
d. Ein Lagertank zur Aufnahme und Regulierung des abgeladenen Schlamms ;
e. Ein programmierbarer Logik-Controller (PLC), der so konfiguriert ist, dass er:
i. etwaige vorgelagerte Systeme zu managen, wie z. B. das Hebesystem mit einem automatischen und manuellen Ein-/Ausschalter für die Pumpe, Betriebszustand und Alarme, Füllstandsmessung und Ablesen der Daten in einem Rückführungstank und Alarme für mögliche Überläufe oder solche für Notfälle;
ii. den Filtrationsprozess zu steuern, wie z. B. die periodische Umkehrung der Strömungen im Tank und die Hinzufügung von Durchflussmengen entsprechend dem Füllungsgrad des Filtermediums ;
iii. die von jedem Melder gesammelten Daten auslesen, einschließlich Regen, Durchfluss, Füllstand und Multiparameter-Melder;
iv. das Multiparameter-Detektorsystem multifunktional managen, indem es die gesammelten Daten in Bezug auf Anomalien, Notfälle und Überläufe verarbeitet, woraufhin eine Warnmeldung und die Eindämmung der anomalen Flüssigkeiten ausgelöst werden.

2. In dem oben in Anspruch 1 definierten System können die Rollgerüste, die die Filtereinheiten enthalten, entfernt werden, damit das Filtermaterial entnommen und ersetzt werden kann, und die modularen Einheiten können von den Rollgerüsten entfernt werden;

3. Das System, gemäß den vorhergehenden Ansprüchen, umfasst außerdem stromaufwärts der Rollgerüste ein hydrodynamisches Wirbelsystem zur Abtrennung und Entfernung von Schwebstoffen aus dem Wasser.

4. Das System gemäß den vorhergehenden Ansprüchen umfasst auch die Mittel zur Dosierung und Injektion des Desinfektionsmittels auf Wasserstoffperoxidbasis für die Filtersanierung; diese Desinfektion verhindert die Bildung von Biofilm auf dem Filtermedium.

5. Darüber hinaus umfasst das System gemäß den vorhergehenden Ansprüchen auch ein automatisiertes System, das das Filtermedium durch die Injektion des ozonisierten Wassers wiederherstellt;

6. Das System ist gemäß den vorhergehenden Ansprüchen auch mit einem System für erneuerbare Energien ausgestattet, das Photovoltaikanlagen umfasst, die Sonnenstrahlen einfangen und in Strom umwandeln und in Kombination mit Wasserturbinen betrieben werden, die die kinetische Energie des Wasserstroms zur Stromerzeugung nutzen.

## Revendications

1. Un système de filtrage à filtration horizontale pour le traitement des eaux usées et des eaux pluviales de ruissellement, est composé de :
a. Un réservoir de stockage étanche, comprenant :
i. Un secteur de filtration centrale comprenant plusieurs échafaudages roulants installés en parallèle et scellés hydrauliquement les uns aux autres. Chaque échafaudage roulant renferme des unités de filtration modulaire rangées, les unes au-dessus des autres et remplies de média filtrant; les échafaudages roulants sont couverts par des plaques latérales avant et arrière dotées de trous calibrés de manière à produire, au sein de chaque unité de filtration modulaire, une force hydraulique vers l'intérieur pour les eaux usées et vers l'extérieur pour les eaux traitées; en outre, dans chaque unité de filtration modulaire, les trous calibrés des plaques frontales ne sont pas alignés avec ces des plaques d'arrière pour que les courantes coulent en diagonale biais les média filtrant.
ii. Deux conduits latéraux, qui fonctionnent alternativement, en tant que canal d'alimentation pour l'entrée des eaux usées et en tant que canal d'écoulement pour la sortie des eaux traitées dans le côté opposé de l'unité central de filtration ;
iii. Des vannes automatiques situées en amont des précédents conduits latéraux permettent de renverser la direction du flux;
b. Un système de détecteur multiparamètre et multifonctionnel pour la gestion des urgences ;
c. Une pompe à boue, configurée pour l'évacuation des boues du réservoir de stockage étanche ;
d. Un réservoir de stockage pour recevoir et régler les boues déchargées ;
e. Un contrôleur logique programmable (PLC) configuré pour :
i. manager éventuels systèmes en amont, tels que le système d'élévation doté d'un interrupteur marche-arrêt automatique et manuel pour la pompe, état de fonctionnement et alarmes, mesure de niveau et lecture des données dans un réservoir de recirculation et alarmes des débordements éventuels ou ceux pour les cas d'urgence;
ii. manager le processus de filtration, tel que l'inversion périodique des flux à l'intérieur du réservoir et l'ajout de débit en fonction du degré de remplissage du média filtrant ;
iii. lire les données collectées par chaque détecteur, notamment pluie, flux, niveau et multiparamètre détecteur ;
iv. manager le système de détecteurs multiparamètre est multifonction, à travers l'élaboration des données collectées par rapport aux anomalies, aux urgences et aux débordements, à la suite de lesquels se déclenchent une notification d'alerte et le confinement des liquides anormales.

2. Dans le système défini ci-dessus à la revendication 1, les échafaudages roulants, qui contiennent les unités de filtration, peuvent être retirés pour que le matériel filtrant puisse être pris et remplacé et ces unités modulaires peuvent être enlevées des échafaudages roulants ;

3. Le système, selon les revendications précédentes, comprend en outre, en amont des échafaudages roulants, un système de tourbillon hydrodynamique pour la séparation et l'extraction des matières en suspension dans l'eau.

4. Également le système, conformément aux revendications précédentes, comprends aussi les moyens de dosage et d'injection du désinfectant à base de peroxyde d'hydrogène pour l'assainissement de filtres ; cette désinfection permit de prévenir la production de biofilm sur le média filtrant.

5. En outre, selon les revendications précédentes, le système comprend aussi un système automatisé qui reconstitue le média filtrant grâce à l'injection de l'eau ozonisée ;

6. Le système, conformément aux revendications précédentes, est aussi doté d'un système d'énergie renouvelable comprenant des installations photovoltaïques qui capturent les rayons solaires et le transforment en électricité, fonctionnant en combinaison avec des turbines hydroélectriques, qui utilisent l'énergie cinétique du flux d'eau pour produire de l'électricité.
